# EUROPEAN PATENT APPLICATION

(11) **EP 1 818 386 A2**
(43) Date of publication of application: **15.08.2007**
(21) Application number: 06425788.4
(22) Date of filing: 20.11.2006
(51) Int. Cl.: C10L 1/02, C11B 3/10

(54) **Process of regeneration of exhausted vegetable oil**

(30) Priority: 28.11.2005 IT FG20050009
(71) Applicant: Pangia, Domenico, 71100 Foggia (IT)
(72) Inventor: Pangia, Domenico, 71100 Foggia (IT)
(74) Representative: Altamura, Assunta

(57) **Abstract**

1. The process provides to eliminate from vegetable cooking oil the combustion inhibitors, in particular antioxidant components, and to increase its higher heat value.
2. The regeneration is done by mixing exhausted vegetable oil with zeolite cabasitico-phillipsitica by ionic exchange process and by surface absorption process.The zeolitite is a pyroclastic rock containing a zeolite value not below 50% by weight.
3. The zeolitite jointly used for the regeneration process are cabasite and phillipsite in no binding percentage.
4. The purpose of the regeneration process is the use of exhausted vegetable oil as renewable power source to produce energy. In addition to the economic benefit there is an advantage in the treatment of polluting elements avoiding environment damages.

## Description

1. The present model has the following object: the exhausted vegetal oil treatment deriving from cooking of alimentary product and not alimentary. Actually being this product considered a rubbish is in large proportion dispel in the environment with damage to the ecosystems.
2. For the proportion which is heaped there isn't a well defined reutilization activity, being the product in large part exceedingly dirty and pong. After filtration too to eliminate the sediments it isn't useful as combustible because it doesn't produce combustion reaction or, if this reaction happen, it stops after a few time.
3. Of one palmitate oil sample deriving form a fried food it has been impossible to determine the calorific powerful, with the calorimetric bomb, also in relation 1/3 with benzoic acid as start.
   The cause derives from the presence of antioxidant components in the exhausted vegetal oil formed as consequences of its use which stops the radicalic reaction which is the base of combustion process.
4. The regeneration process here described has the purpose the recuperation of exhausted vegetal oil as combustible so that to produce energy form renewable source. Raw exhausted vegetal oil is mixed and kept in contact with zeolitite-cabasitic-phillipsite in powder.
5. This is pyroclastic rock whose content in cabasite and phillipsite, the sum of them, is not below 50% weigh.The cabasite as formula Ca2(Al₄Si₈O₂₄). 12 H₂O and the phillipsite as formula (Ca,Na2,K2)3(Al6Si10O32). 12H₂O are both zeolite belonging to the class of Tectosillicate.

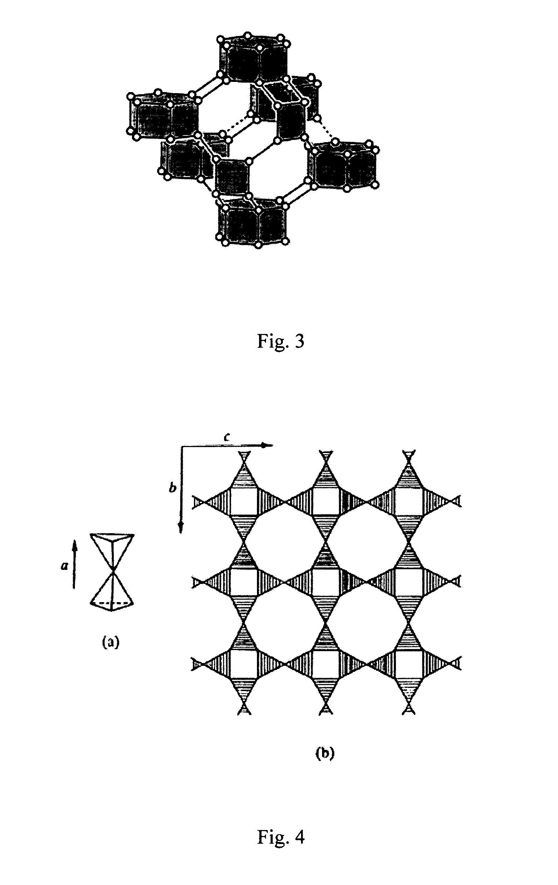

1. Chemically they are alluminosilicate hydrate of alcalinic elements (Na, K) and alcalinic - terrosi elements (Ca).
   Their mineralogical structure is constituted by a 3-d scaffolding of tetraedros Si04- where the partial substitution of silica with aluminium give to the structure negative sign balanced by the presence of cations of alcalinic metal and alcalinic-terrosi.

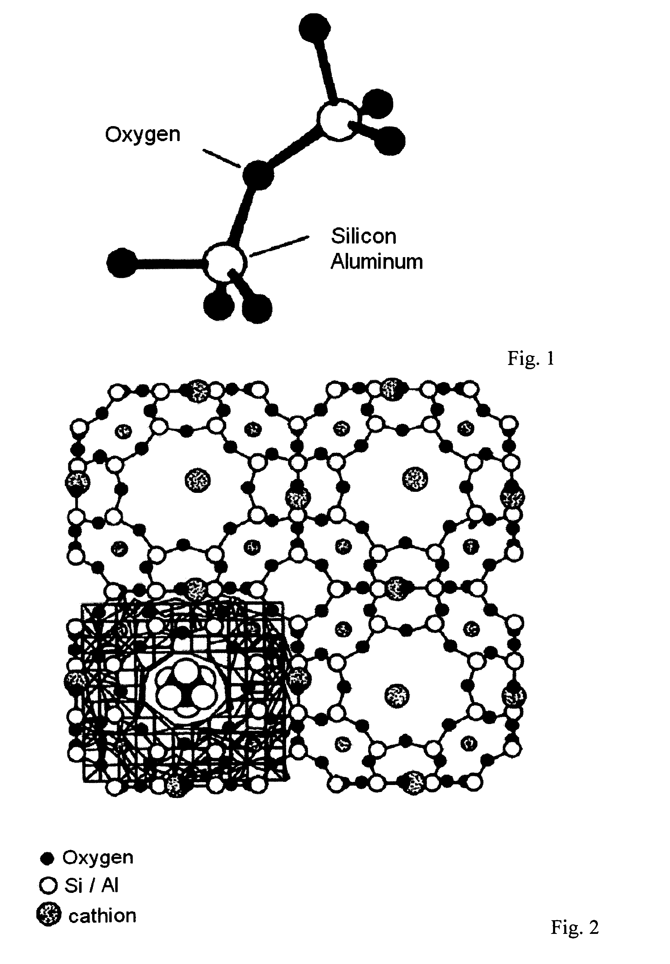

2. The figure 1 shows the scheme of base tetrahedros scaffolding.
   The nature of the bond between the cations and the tetrahedros structures is of electrostatic kind producing in this way the ionic mobility that gives to the cabasite and phillipsite the property of ionic exchangers.
   A particular type of ionic exchange is the acceptance of a proton that create the property of cabasite and phillipsite to behaviour as Bronsted acids.
3. Also for this property the two zeolite eliminate the water residual from exhausted vegetal oil. The Fig. 2 shows the scheme of cations disposition inside the tetrahedros scaffolding.
   The aggregation of tetrahedros scaffolding generate wide inside cavities communicating between themselves and with external by conduit of molecular size that give to cabasite and phillipsite an enormous surface till to 700 square metres/0.1 gram.
4. This characteristic gives to cabasite and phillipsite exclusive property of surface absorption. The fig. 3 shows the aggregation of the tetrahedros scaffolding in the cabasite and the creation of conduit of molecular size. The fig. 4 shows the aggregation of tetrahedros scaffolding in the phillipsite and the creation of conduit of molecular size.
5. Both for ionic exchange and surface absorption the cabasite and phillipsite eliminate from raw exhausted vegetal oil the antioxidant components that inhibited the combustion.

1. By ionic exchange and surface absorption they eliminate also water, of which vegetal oil enriched after cooking alimentary products, due to the loss of water by warming of the food.
The elimination of water determine an increase of the calorific powerful superior to a value between 10 and 20% respect to the original raw exhausted vegetal oil.
2. The raw exhausted vegetal oil is mixed with zeolitite-cabasitic-phillipsite in powder in a quantity of 100-500 mg of zeolitite/ton of exhausted vegetal oil and maintained in contact by mechanical shaker for a variable time from 100 to 130 minutes.
3. After all there is the split of zeolitite from the oil by centrifuge and then micro-filtration. The treatment process is exclusively of mechanical and physical nature and it doesn't produce any emission.
Exhausted vegetal oil produced can be stocked and used as combustible so that.
4. Test in firebox with smoke tube made on palmitate oil exhausted deriving form fried food restaurant produced emission in atmosphere whose chemical parameters are showed in table 1, compared with value determined in the same conditions by combustion of gasoline.
5.

| | **Unit of measure** | Palpitate oil exhausted after process of regeneration | Gasoline |
|---|---|---|---|
| Ambient temperature | °C | 21,4 | 23,4 |
| Withdrawal temperature | °C | 206,7 | 197,5 |
| Powerful superior | Kcal/Kg | 10460 | 10826 |
| Duration withdrawal | Ore | 0,5 | 0,5 |

| **Parameters** | | | |
|---|---|---|---|
| 0₂ | % | 8 | 10 |
| CO₂ | % | 9,8 | 8 |
| SO₂ | mg/nmc | 0 | 0 |
| NO | mg/nmc | 37 | 59 |
| NO₂ | *mglnmc* | 0 | 0 |
| NOₓ | *mglnmc* | 56,7 | 90,1 |
| Hidrocarbon no burning | *mglnmc* | 3 | 149 |

| **Work Parameter** | | | |
|---|---|---|---|
| Leak of chimney | | 10,9 | 12,1 |
| Energy performance ETA) | | 89,1 | 87,9 |
| Leak of no burning | | 0 | 0 |
| LAMDA(excess of air) | | 1,62 | 1,86 |

1. Tab. 1 *- Palmitate oil exhausted after process of regeneration and gasoline. Combustion in firebox with smoke tube made. Analysis of emission.*
   It showed that emission values relatives to the combustion of exhausted vegetal oil after regeneration process are more lower to the fixed value of Italian and European law on the matter as well as lower to the ones relatives to gasoline combustion, intended this one as traditional combustible.
2. It has not being possible made the same test on exhausted palmitate oil non treated because it doesn't produce any combustion.
   The zeolitite divided from the treatment process of exhausted vegetal oil is biomass that can be recovered.

## Claims

1. The use of zeolitite-cabasitic-phillipsite in the treatment of exhausted vegetal oil for their reutilization as combustible.

2. The use of mix of zeolite, cabasite and phillipsite in any relation between them in the treatment of exhausted vegetal oil for their reutilization as combustible.
